# EUROPEAN PATENT APPLICATION

(11) **EP 1 892 915 A2**
(43) Date of publication of application: **27.02.2008**
(21) Application number: 06077273.8
(22) Date of filing: 18.12.2006
(51) Int. Cl.: H04L 29/06, H04M 3/54

(54) **Internet protocol converter for VoIP call forwarding**

(30) Priority: 04.08.2006 US 821399 P
(71) Applicant: Benalclaf, S.L., 29780 Nerja - Málaga (ES)
(72) Inventor: Merino Gonzalez, Jose Luis, 29780 Nerja (Malaga) (ES); Sanchez Calvo, Pablo, 28020 Madrid (ES)
(74) Representative: Manzano Cantos, Gregorio

(57) **Abstract**

An internet device (ID), meaning any internet device that has at least one or more build-in proprietary internet converter (PIC), such PIC which has at least one or more build-in or remotely connected to a proprietary internet converter web pages (PICWP), and with at least one or more user accessible input interfaces, more commonly referred to as an internet protocol (IP) address or web-site address or URL, whereas the PIC is capable of detecting and communicating with any single or simultaneously with any multiple inbound communications request and communicate with any single or simultaneously with any such multiple device(s), whereas such device(s) is/are capable of accessing the internet in the normal way the user uses its device, be it a fixed device (FD), desktop or portable computer (PC), wireless device (WD), voice over internet protocol device (VoIPD) or any such other device capable of communicating through or connected to an internet service provider (ISP) or to an internet device (ID) or to a public access network (PAN) or to a wireless network (WN). The PIC is also capable of identifying any such previous mentioned individual device user and capable of rejecting such communications request if it is not authorised or recognised as an authorised user of the PIC functions.

Once a device user is detected as an authorised user, then the PIC will detect the inbound communications protocol and communicate with it, through its at least one or more input/output interfaces, and also the PIC will convert the device user inbound communications protocol requests, commands and parameters settings to the outbound communications protocol(s) as to allow the PIC to interface and communicate with each of the corresponding user account(s), be such user account(s) residing in a ID, ISP, PC, VoIPD or any such other device connected to the internet wherein a specific user account and its parameters settings reside, whereas such user account is associated with a specific internet service provider and each of its unique user name(s) or commonly referred to as a user specific voice over internet protocol user name, and where such ID or ISP or PC or VoIPD has a call forwarding or call divert function that includes forwarding or divert to another VoIP user name or alternatively one or more build-in proprietary voice over internet protocol call forwarding (PVoIPCF) function accessible by the PIC.

As a matter of illustration of the proprietary internet converter (PIC) functionality, say one user originating its communication from, but not limited to, a desk top computer or portable computer (PC) accesses through its web-browser its specific user assigned internet protocol address of the PIC, then the PIC would first check if such user is an authorised user, and if not reject the communication and if authorised will allow access and send back to such PC user a web-page in which the PC user can enter the device to which it wishes to communicate with, in example (i.e.) a voice over internet protocol (VoIP) user name of a specific internet service provider (ISP), whereas the PIC will process such PC user request and connect to such corresponding ISP and log-into the corresponding user account associated to such PIC inbound user, or in this case PC user, and then the PIC will set such ISP user account to call forward or call divert to the PIC inbound user specified VoIP user name and then the PIC will reply to the inbound user with a different web page to the previous mentioned informing the inbound user that the call forward request has been processed and allow the inbound user to initiate his call to such VoIP user name from any device it wishes, be it from a PC or VOIPD over the internet, from any phone, meaning any FD or WD, by calling the call-in phone number associated with the specific ISP user account, which has been call forwarded to the specified VoIP user name. Once the specific inbound user, initiates such previous mentioned call to the call-in phone number associated with the specific ISP user account the specific inbound user will be connected through to the specified or set call forwarded VoIP user.

As the PIC is accessible world-wide through the PICWP by the internet, any authorised in-bound user, i.e. any WD with internet access, will be capable of calling any VoIP user name world-wide from any country where the ISP user account has at least one call in phone number associated, at the applicable call-in tariffs.

## Description

### FIELD OF THE INVENTION

This invention relates in general terms to users of internet service providers, be they desktop or portable computers and/or voice over internet protocol devices and/or wireless devices and/or fixed devices, in particular a "proprietary internet converter" method and architecture(s) specifically for call(s) routing, or calls forwarding or calls divert, towards "voice over internet protocol users", applicable to users of any device(s) that can access the internet which have an associated "internet device" and/or "internet service provider" user account with at least one or more account specific call in number and call forwarding or call divert function to all of its corresponding "internet service provider users", whereas such call forwarding or call divert function may be performed by an "internet device" and/or "internet service provider" for each of their individual accounts or by a "proprietary voice over internet protocol call forwarding" embedded into such "internet device" and/or "internet service provider" capable of enabling, setting and disabling each of their individual accounts call forwarding or call divert, and more specifically to a method for interfacing and/or interconnecting and communicating such "proprietary internet converter" with a build-in "proprietary internet converter web pages" with any desktop or portable computer, voice over internet protocol device and wireless device, capable of interconnecting and communicating through or with the internet and through a "proprietary internet converter" with a build-in "proprietary internet converter web pages" with any one or more "internet device" and/or "internet service provider".

### BACKGROUND OF THE INVENTION

Currently most or all public and private switching networks (WN and FN) and private automatic branch exchange (PABX or PBX) can now handle voice and/or data allowing simplex and/or duplex calls routing for voice calls, video calls and some even data calls such as open standard or proprietary VoIP (proprietary voice over internet protocol) calls. Some smaller calls router versions devices for private and small businesses can now handle calls routing between public switched telephone network (PSTN) and voice over internet protocol (VoIP) and vice-versa, however often with the requirement of a personal desktop or portable computer (PC) permanently connected to the internet or in some cases even requiring additional hardware calls router devices (HWCRD) connected between the PC and PSTN (fixed land-line), typically interconnecting such additional HWCRD and PC with their corresponding universal serial bus (USB) interface or in some other cases where such HWCRD is basically a wireless device (WD) or mobile phone interconnecting and communicating with the PC through Wifi or Bluetooth whereas such WD has to be within a range of approximately 100 meters or less from the PC, mainly in order to run a third party or in-house proprietary VoIP application and to allow interfacing and in some cases even to power through such HWCRD. Yet in other more commonly mass market used available technologies the calls routing is strictly interfaced by a PC permanently connected to the internet, whereas such PC runs a third party or in-house proprietary VoIP application, allowing incoming voice calls from and to external hardware device connected through their USB with previously mentioned PC, which has to be permanently logged onto a user account from an internet service provider and permanently switched-on, meaning connected to the mains power supply, typically in a private home or small office environment.

Such previously different types of calls routers, jointly referred to hereinafter as CR, require the originating call party, in example a wireless device user, that wishes to be routed through to a VoIP user or a fixed or wireless phone user, has to originate the call manually from a wireless device or mobile phone, fixed phone or VoIP phone by calling the CR phone number associated to its connected PSTN or the VoIP address associated to its VoIP phone and then when in voice call follow pre-recorded voice instructions from the CR as to enter manually a security code and then the VoIP user address or PSTN phone number or wireless device phone number that it wishes to talk to and the same applies vice-versa, meaning in example when a VoIP user calls the phone number associated with the PSTN connected to the CR, then when in call the VoIP user has to select manually the outgoing calls function check that it his has sufficient credit and then, following the CR instructions, the user has to enter the phone number to whom it wishes to be routed through by the CR. In many aspects limiting the actual use of such systems to the more sophisticated or technology savvy users with no sufficient security provisions for abuse of these calls router systems by unauthorised third parties and also a major drawback is that the user of such CR with an external HWCRD are typically connected in most cases to their home PSTN, thus having this communication link used most of the time, not allowing simultaneous use say one user use the PSTN and another user, say of the same family, use his WD, because in previous existing systems it's the WD that calls its home PSTN to be call routed through the external hardware connected to its home computer that has to be permanently connected to the mains power supply and permanently logged on to a user account as to allow permanently to run a required application for such calls routing function.

In view of these technological advances, particularly in both calls router server devices and the handheld battery powered wireless devices and the home personal computers and wireless broadband internet access availability in general, what is needed is a method that allows strictly only authorised users, in particular for those users with no PSTN connection however with a wireless device and wireless coverage from a public or private wireless system or Wireless Network (WN) and/or with access to public internet access points through a PC and/or public PSTN phone(s) access points as outlined in this invention and thus in particular allowing each authorised user of this invention the freedom to choose, no matter where they are in the world, in particular users with a user account accessible though the internet, to call any internet service provider user in the world without the need of having his own personal fixed home PSTN (phone line) nor a home computer, when it wishes to make outgoing calls or communications, in particular from any wireless device capable of accessing the internet. As wireless coverage by cellular networks is available almost world-wide and the use of mobile phones penetration has reached substantially percentage value, and in some geographies even outstripping the penetration percentage of fixed phone users, the present invention addresses a real need and demand of particularly the mobile handset phones users to be able to make outgoing calls from their mobile phones, with mobile overage and a valid subscriber identity module subscription (SIM), at any time in any place, calling to any place in the world, to any voice over internet protocol user of any internet service provider, at the worst case at the cost only one- local call rate or even free of charge in some cases depending on his WN tarrif plan, without having the need to leave their home computer permanently switch on or permanently running any applications, and by using its wireless device or mobile phone in the same way the user used it always before as described through the benefits of this invention. The previous may also apply instead of calling any voice over internet users (VoIP user) to calling any phone number. All the wireless device or mobile phone user, or PC does not require to download any application whatsoever into its wireless device or mobile phone or PC, but simply by using the method as described in this invention applied for a single user start using the benefits of this invention at no extra charge being able to call any VOIP user associated to its internet service provider and simply paying his WN for a local call rate or by simple subscribing to an internet service provider that makes use of this invention which may charge a small fee for the benefits of this invention and thus using all the benefits, as described within this invention.

### REFERENCES CITED:

"Google Mobile UK", Get Google Mail on the go! Now you can access your Google Mail messages from the web browser on your mobile device. Read and reply to your Google Mail messages any time, anywhere. Google Mail should work on most web enabled mobile devices that have a mobile data plan. Point your device's web browser to http://m.gmail.com. Downloaded from the internet from the following URL: http://www.google.co.uk/mobile/, on 12 July 2006.

"Google Talk", 1. What does Google Talk do? Google Talk is a downloadable Windows application that enables users to quickly and easily talk or send instant messages to their friends for free. Calls are made through your computer using the latest voice technology; all you need is an Internet connection, a microphone and a speaker. If you don't have a speaker or built-in microphone, you may want to consider buying a headset, which will also provide the best voice quality when using Google Talk. When you download and use Google Talk, you're actually connected to the group of users on the Google Talk network. Because Google Talk supports open standards, Google Talk users can also talk with users of other service providers that support open standards. So you can talk with more people, and not just ones who download Google Talk. We're hoping the list of service providers that support open standards will continue to grow, and that more and more users around the world will be able to talk to each other while still getting to use the service of their choice. 2. Who and where can I call? How long can I talk for? Is it really free? Once your friends download Google Talk, you can talk to them anytime they're online. They can be anywhere in the world, and you can talk for as long as you want. Oh yes, and it's free.. Downloaded from http://www.google.com/talk/about.html, on 12 July 2006.

"Jabphone" (beta!) allows you to call your friends on the phone and to send SMS messages to their mobiles, anywhere in the world, using the Jabber Make sure that you are using a Jabber client that supports Jingle audio sessions, such as Google Talk. Other Jabber compatible clients are working on adding support for this technology, namely Psi, gaim and Kopete. Please note that, as of now, Google Talk is the only fully supported client. Instant Messaging system. That's it! You are now ready to place a call. Whenever you feel like talking to someone, double-click Mr. Jabphone's name in your contact list and chat him "call" followed by the phone number you want to reach. For example, to call someone in New York: To send a SMS message to a mobile phone, double-click Mr. Jabphone's name in your contact list and chat him "sms" followed by the phone number and the message you want to send. For example, to SMS someone in San Francisco: sms 14155551212 Sorry, I'll be late. See you later! call 1 212 555-1212. Downloaded from http://jabphone.com/, on 12 July 2006.

"Yahoo Messanger". Make Cheap PC-to-Phone Calls*. Make free worldwide PC-to-PC calls. Plus call regular or mobile phones in the U.S. or in 30+ countries for 2/min. Make Free PC-to-PC Calls*. All you need is a headset, or a microphone and speakers. It's that easy - just click the Call button. IM with friends on Windows Live (MSN) Messenger**. Have all your IM friends in one place. Ping-away with people who use Windows Live (MSN) Messenger. They'll also be on your contact list so you can see when they're online. Attention developers! Find out how to create your own plug-in for the Yahoo! Messenger community. Make PC-to-Phone calls to regular and mobile phones with the Yahoo! Phone Out service. Rates start at 1 per minute (and are just 2 per minute within the U.S. and to over 30 countries). Receive calls on your computer from friends using regular or mobile phones. With the Yahoo! Phone In service, you can choose a phone number for your PC from many countries and areas. Downloaded from http://messenger.yahoo.com/ on 12 July 2006.

"SKYPE", What is Skype? Skype is a little piece of software that lets you make free calls to anyone else on Skype, anywhere in the world. And even though the calls are free, they are really excellent quality. If you and your friends, family or business contacts are using webcams, you can also make free video calls. You can even call landlines and mobile phones at really cheap per minute rates (and there's no set-up or subscription fee). Skype automatically encrypts calls, chats and file transfers before sending it through the internet so no-one can intercept your call, text or file transfer. And it's completely free of advertising, so you won't be disturbed by annoying pop-ups or banners. SkypeOut is the great, low-cost way to call landlines and mobiles direct from Skype. To make calls you'll need to purchase some Skype Credit - it starts from as little as € 10. Skypeln is a number that lets you receive calls from landline and mobile phones on Skype. It is cheap and easy way for your family, friends and colleagues to call you at a local rate, no matter where you are.

Skype for Pocket PC. Skype on the go with Skype for Pocket PC. Make voice calls and chat for free, no matter where you are. It's easy to use and available when you connect to WiFi or 3G. Can I forward calls to this SkypeIn number? Yes, you can forward a call to your SkypeIn number as you would any other regular phone call. What is call forwarding? With call forwarding, you can redirect incoming Skype calls to another Skype Name, mobile or landline number. Downloaded from http://www.skype.com/download/ and http://support.skype.com/index.php on 12 July 2006.

Press Release: LAS VEGAS (2006 International CES, January 6, 2006): WORLD'S FIRST MOBILE SKYPE SOLUTION: VoSKY^{™} CALL CENTER, Make or Receive Skype Calls from Any Phone, Wherever You Are": http://www.actiontec.com/company_info/press/release010606.php

AND 1. Connect Call Center. Connect Call Center to a computer that is running Skype and to a phone line. 2. Dial Your Contact. From any phone, including mobile: Dial the phone number Call Center is connected to. Then dial your Skype or SkypeOut contact's number. 3. Enjoy Skype Anywhere. Call Center will connect you to your Skype or SkypeOut contact. Now you can enjoy Skype calls anywhere you are! http://www.vosky.com/product.php?pid=320 AND product sepcification:

http://www.vosky.com/product.php?pid=320&section=specifications respectively, downloaded on 26 March 2006.

"Epyx Mobile Internet Telephony": With EpyxMobile you can call Skype users all over the world from your mobile phone for (almost) free. What is more, you can also use SkypeOut! Depending on your mobile phone provider and your calling plan, your phone calls with EpyxMobile might be completely free. EpyxFree exposes a time limit on the length of the call. Should you find it useful, please consider upgrading to EpyxMobile Pro or Net. Bluetooth-enabled mobile phones: EpyxMobile is compatible with Bluetooth®-enabled mobile phones that support Handsfree Profile 1.1 and above. If your Widcomm stack can establish an Audio Gateway connection to it, EpyxMobile will be able to use it. Hardware Requirements: 1 Personal Computer (PC) with broadband Internet connection running Skype, 1 USB Bluetooth Receiver in case your computer is not already Bluetooth-enabled, 1 extra mobile phone (later referred to as your secondary mobile phone) with Bluetooth^{®} wireless technology. Software Requirements: The most recent version of Skype (1.3.0.57, July 8, 2005), The Widcomm (BroadCom) Bluetooth stack software, which comes with your USB Bluetooth Receiver, Windows XP or higher. Copyright 2005 Vendex International Ltd. Previous mentioned information from Vendex International Ltd accessed from http://www.epyxmobile.com/index.php?page=epyxfree on 12 July 2006

"Make free calls (landlines only) and get a free VoIP-In phone number": www.voipbuster.com, downloaded on 5 April 2006.

"Free phone calls all around the world. Free calls to any regular landline in": http://www.voipstunt.com/en/free.html AND "Canada-, China-, Hong-Kong-, Mexico-, Singapore-, Thailand-, United States- (Landline & Mobile) Super Deal! free And United Kingdom-, Belgium-, France-, Italy-, Spain-, Germany- etc. (Landline) SuperDeal! free": http://www.voipstunt.com/en/rates.html, downloaded on 7 April 2006.

"Internet Protocols", Chapter 30, page 30-1 to including page 30-16, Internetworking Technology Overview, June 1999; http://www.cisco.com/univercd/cc/td/doc/cisintwk/ito_doc/ip.pdf, downloaded as a PDF file on 8 April 2006.

"Wireless Application Protocol", Oct. 1999 Wireless Internet Today, pp. 1-20.

VoIP in Demand; "http://voip-in-demand.com/page-voip-calling-methods.php: "The simplest and most common way is through the use of a device called an ATA (analog telephone adaptor)...., downloaded on 1 March 2006.

"INTERNET MULTICAST ADDRESSES:(last updated 31 March 2006): Host Extensions for IP Multicasting [RFC 1112] specifies the extensions required of a host implementation of the Internet Protocol (IP) to support multicasting....; http://www.iana.org/assignments/multicast-addresses, downloaded on 8 April 2006.

### BRIEF DESCRIPTION OF THE DRAWINGS

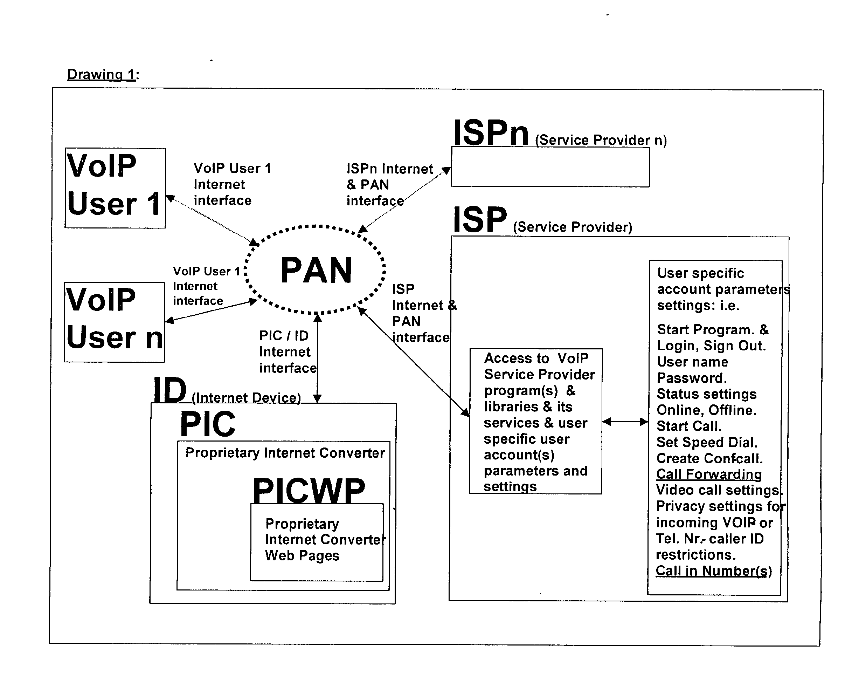

DRAWINGS 1, 2, 3 and 4 shows one example each of the embodiment of implementation and integration thereof of "proprietary internet converter" (PIC) and "proprietary internet converter web pages" (PICWP), whereas such PICWP is a sub part of or embedded into a PIC, in accordance with the present invention and in particular of proprietary internet converter (PIC) build-into an internet devices (ID) or an internet service provider (ISP) device communicating through a PIC interface and/or ID internet interface and/or ISP internet interface, and with or through a public access network (PAN) and with an internet service provider (ISP and ISPn) and any such other device, be it a voice over internet protocol user (VoiP User1, VoIP User n) or any portable computer- and/or, fixed- and/or wireless- devices capable of accessing the internet even at low bit rates, in accordance with the present invention, and showing the present invention within a basic graphical functionality of internet or voice over internet protocol communications networks as existing today, without limiting any such other ways of implementing the architectures and embodiments as described within the claims of this invention.

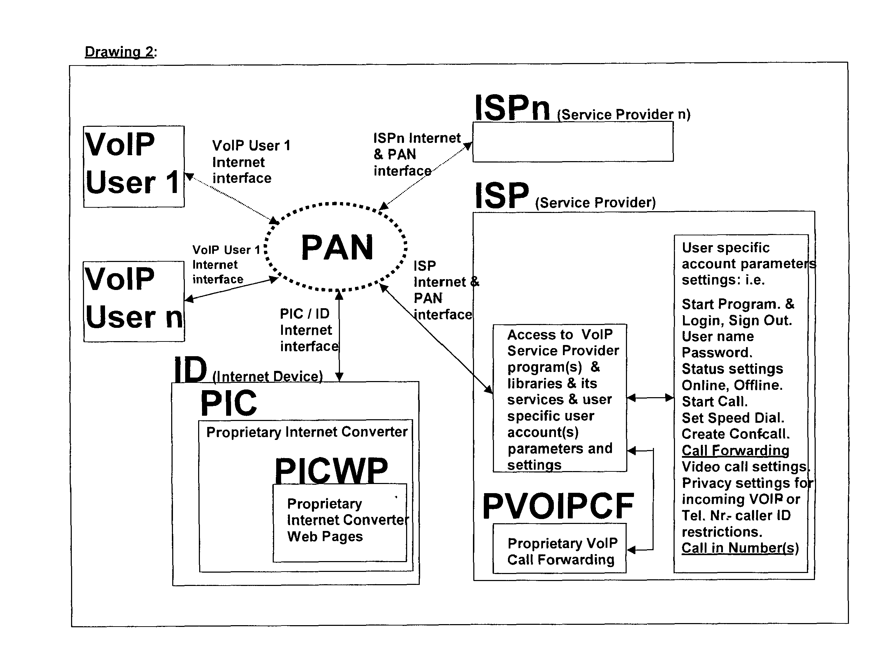

Whereas Drawing 1 in particular shows a method and architecture of the PIC, and its build-din PICWP, within or build-into an internet device (ID), which is its most simple form may be an internet server, and an ISP which is capable of call forwarding to at least all its ISP users (voice over internet protocol users or names), whilst DRAWING 2 shows in particular a method and architecture where the ISP is not capable of call forwarding incoming calls to its ISP users on its own and thus as to allow to use the benefits of this invention has build-in a "proprietary voice over internet protocol call forwarding" (PVoIPCF).

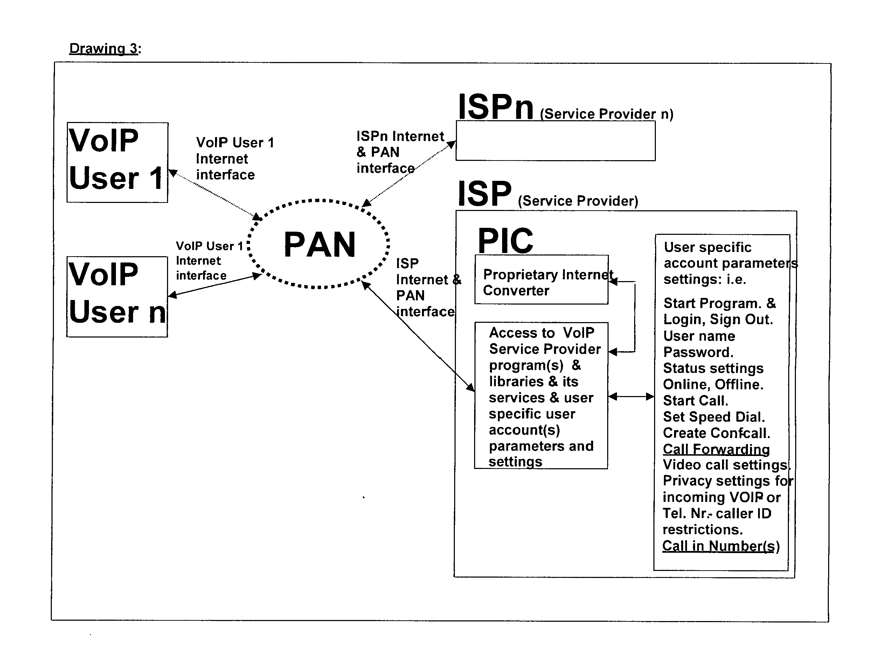

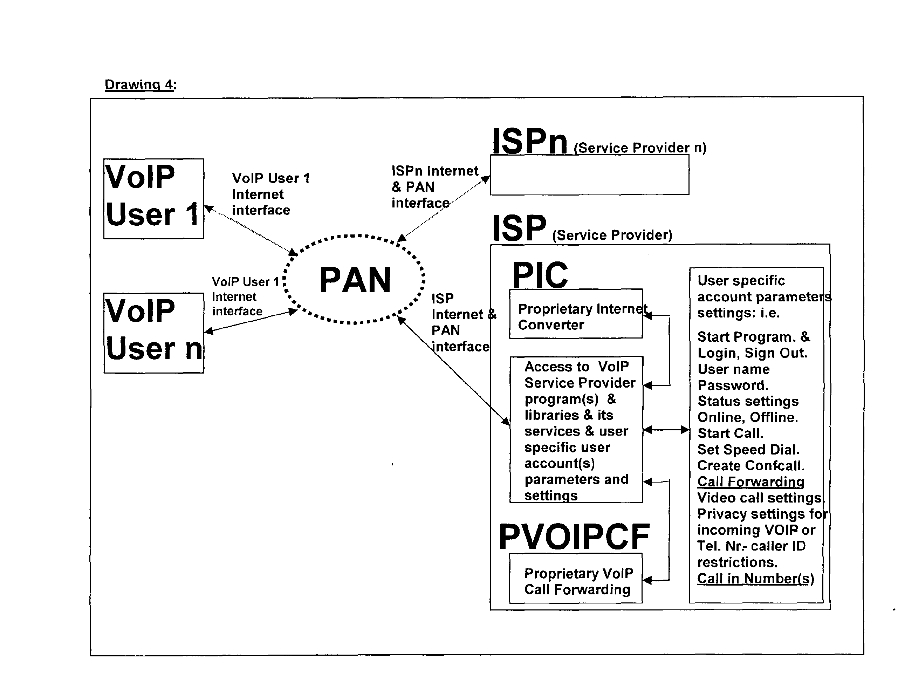

Whereas Drawing 3 in particular shows a method and architecture of the PIC, and its build-din PICWP, within or build-into an internet service provider (ISP) device, which is its most simple form may be an internet server, and such ISP which is capable of call forwarding to at least all its ISP users (voice over internet protocol users or names), whilst DRAWING 4 shows in particular a method and architecture where the ISP is not capable of call forwarding incoming calls to its ISP users on its own and thus as to allow to use the benefits of this invention has build-in a "proprietary voice over internet protocol call forwarding" (PVoIPCF).

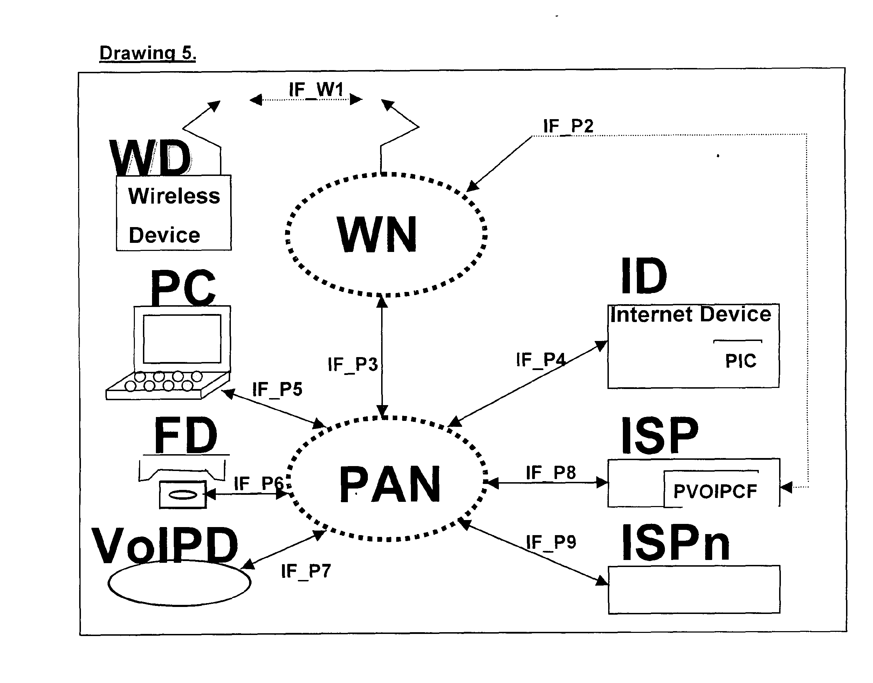

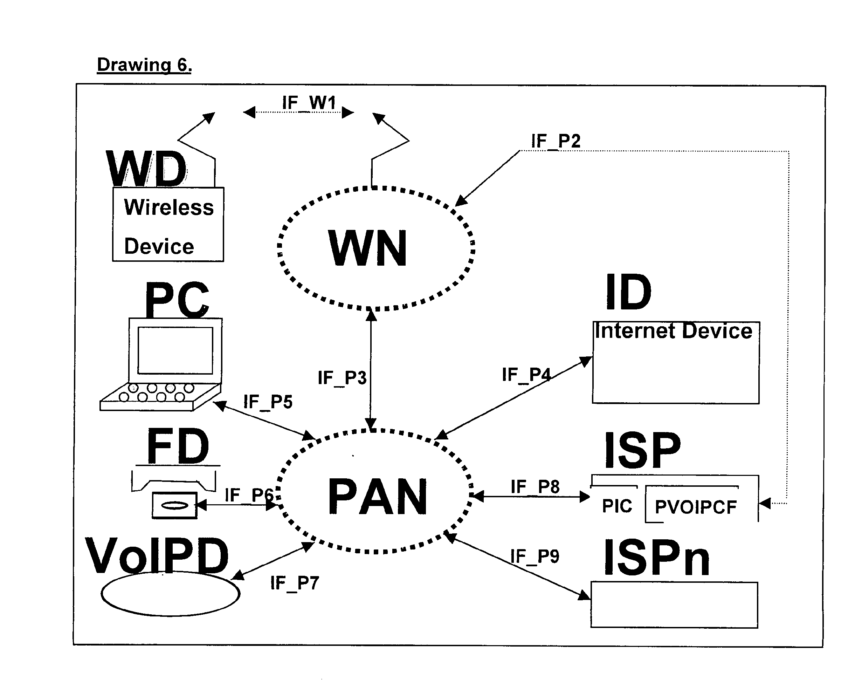

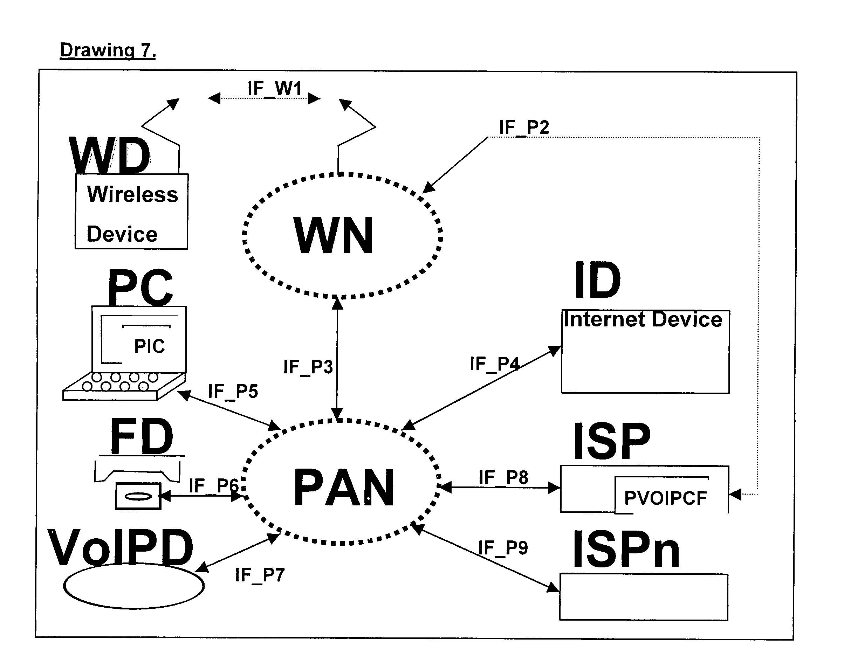

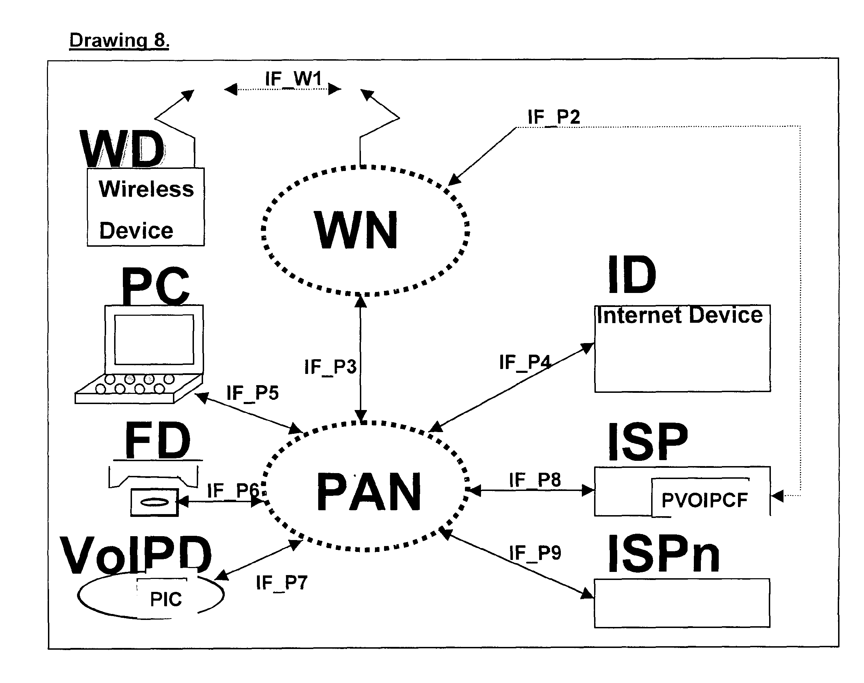

DRAWINGS 5, 6, 7 and 8 are examples of the embodiment of implementations and combinations thereof in accordance with the present invention(s) with respect to some of the different internet service providers (ISP), wireless networks (WN) and public access networks (PAN) architectures, and any such devices within such embodiments capable of accessing the internet and/or capable of making calls, such as desktop or portable computers (PC) and/or fixed devices (FD) connected with or to such PAN and/or ISP, voice over internet protocol devices (VoIPD) associated with such PAN and/or ISP, wireless devices (WD to WDn) associated with such WN, associated with such WN.

Whereas IF_W1 is a wireless interface between any WD and his corresponding WN, IF_P2 is a fixed and/or wireless interface between any such ISP and the corresponding WN, IF_P3 is a fixed and/or wireless interface between any such WN and the corresponding PAN, IF_P4 is a fixed and/or wireless interface between any such internet device (ID) and the corresponding PAN, IF_P5 is a fixed and/or wireless interface between any such PC and the corresponding PAN, IF_P6 is a fixed interface between any such fixed device (FD) and the corresponding PAN, IF_P7 is a fixed and/or wireless interface between any such voice over internet protocol device (VoIPD) and the corresponding PAN, and whereas the PIC is capable of communicating with internet service provider (ISP and ISPn), the ISP with a build-in PVoIPCF and the ISPn without, as the ISPn is capable of call forwarding to all its VoIP users.

Whereas the PIC, with an embedded PICWP; is build-into a ID, as shown in Drawing 5 and/or build-into a ISP, as shown in Drawing 6 and/or build-into a PC, as shown in Drawing 7 and/or build-into a VoIPD, as shown in Drawing 8.

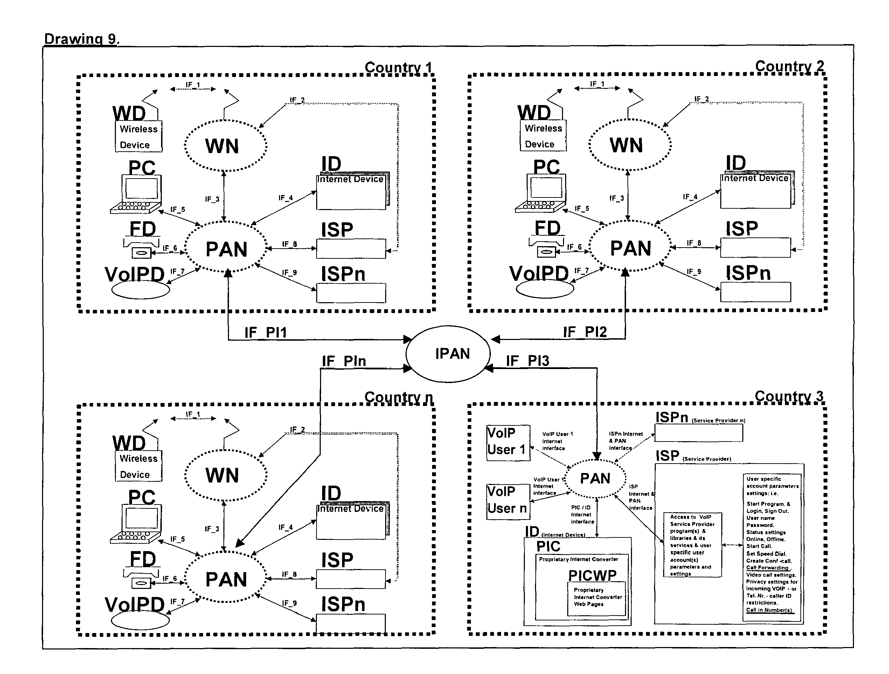

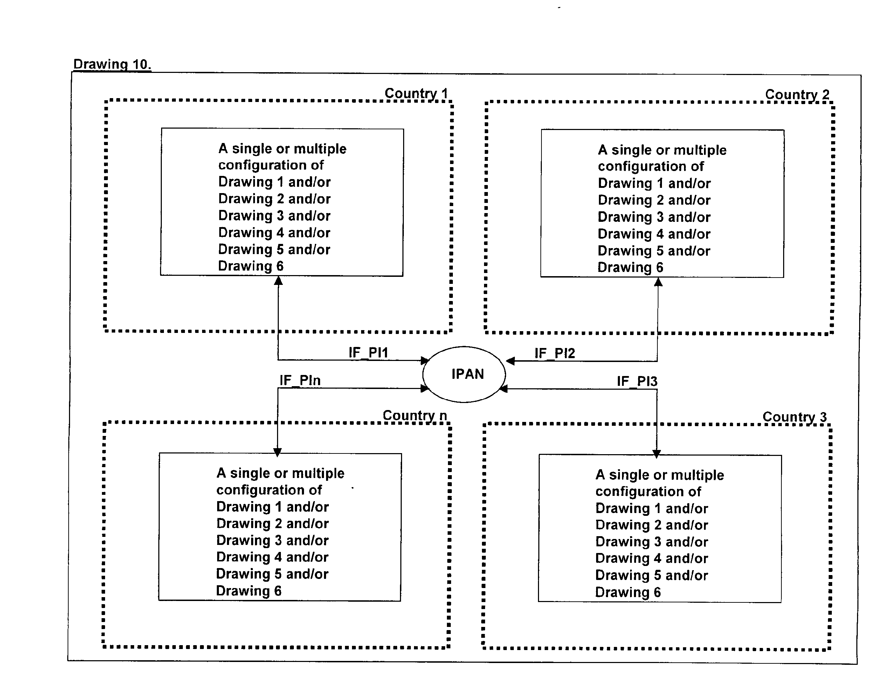

DRAWINGS 9 and 10 show two examples of the embodiment of implementation, integration and some of the different combinations thereof in accordance with the present invention with respect to the proprietary internet converter (PIC), with a build-in proprietary internet converter web pages (PICWP) and the proprietary voice over internet protocol call forwarding (PVoIPCF), within the scope of a multi country or region architecture or implementation, and whereas the PIC and/or PICWP and/or PVoIPCF may consist of any single or multiple combination thereof or an equivalent of each such function or addition performing a similar function within the overall method of this invention, without limiting any such other ways of implementing the PIC and/or PICWP and/or PVoIPCF as described within the claims of this invention.

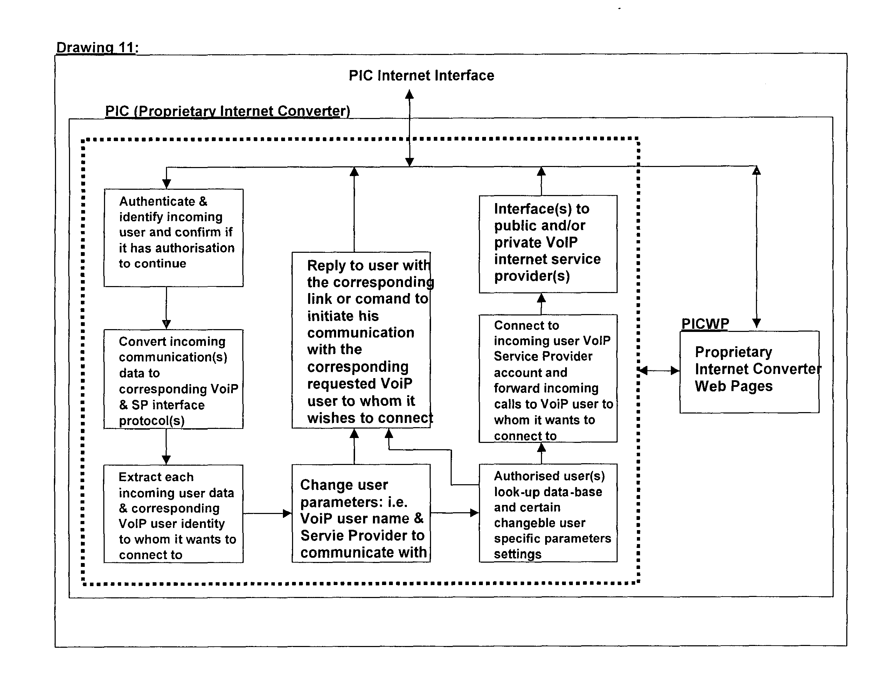

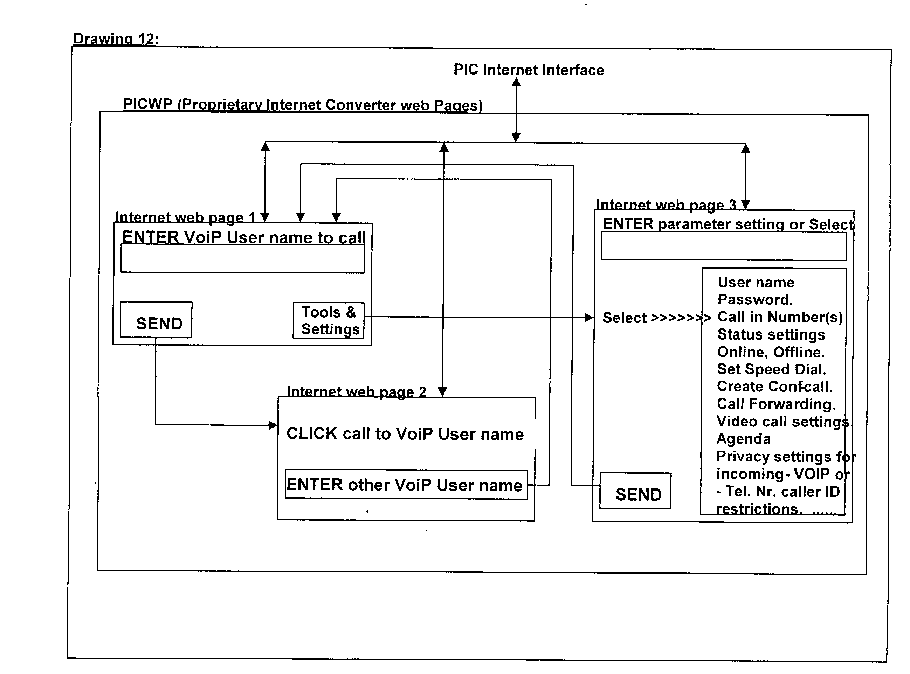

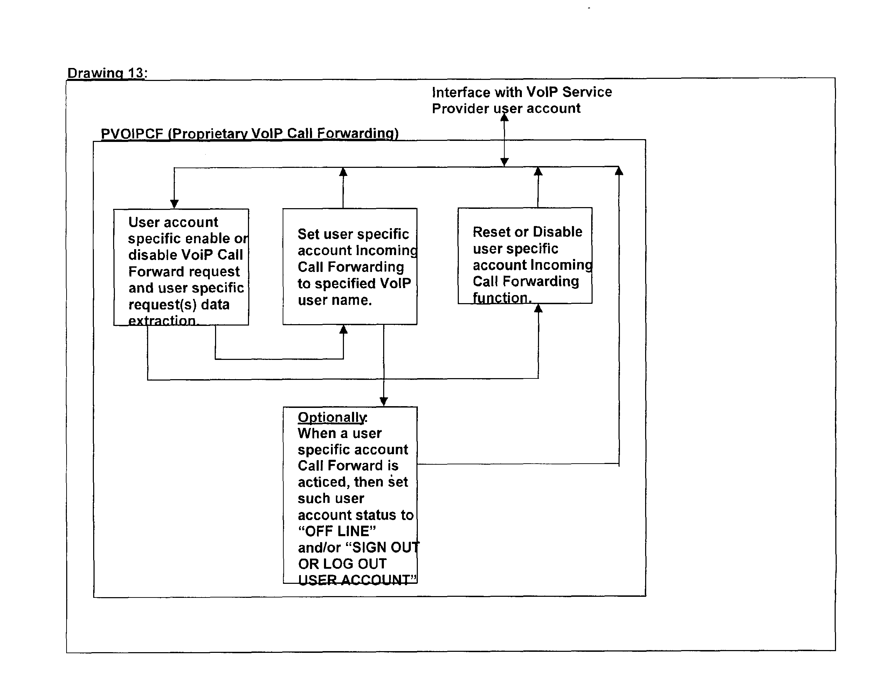

DRAWINGS 11, 12 and 13 show one example of the embodiment of implementation, integration and some of the different combinations thereof, respectively in accordance with the present invention with respect to the proprietary internet converter (PIC) flowchart as shown in Drawing 11, and whereas the proprietary internet converter web pages (PICWP) are expanded as shown in Drawing 11, and whereas one of the possible implementation or flowchart of the proprietary internet converter web pages (PICWP) is shown in Drawing 12, and whereas one of the possible implementation or flowchart of the proprietary voice over internet protocol call forwarding (PVoIPCF) is shown in Drawing 13

Whereas any embodiment of implementation, integration or flowchart of the PIC and/or PICWP and/or PVoIPCF may consist of all of the shown sub-modules and/or sub-routines and/or sub-flowcharts and/or implementation examples or any single or multiple combination or addition thereof or an equivalent of each such sub-modules and/or sub-routines and/or sub-flowcharts and/or implementation examples or addition performing a similar function within the overall method of this invention, without limiting any such other ways of implementing the PIC and/or PICWP and/or PVoIPCF as described within the claims of this invention.

### DETAILED DESCRIPTION OF THE DRAWINGS

DAWINGS 1 to 8, show some of the preferred integration embodiments of the proprietary internet converter (PIC), proprietary internet converter web pages (PICWP) and/or proprietary voice over internet protocol call forwarding (PVoIPCF) as described within this invention, and more particularly as described within the claims of this invention.

Specifically, DRAWING. 1 to 4 are block diagrams of communications systems, showing the preferred integration embodiments of the present invention. For this exemplary embodiment There is shown voice over internet protocol users (VoIP User 1 and VoIP User n), each associated to a specific voice over internet protocol user account of an internet service provider, an internet device (ID), with at least one or more build-in proprietary internet converter (PIC), whereas such PIC has at least one or more build-in proprietary internet converter web pages (PICWP), internet service providers (ISP to ISPn), whereas the ISP has the capability of call forwarding incoming calls of his VoIP users to any such other of its VoIP users and whereas any such individual VoIP users of such ISP has at least one or more dedicated call in numbers assigned or dedicated to an individual user account and whereas such each individual ISP user account, authorized to make use of the PIC functions, is accessible by the PIC, and whereas any such individual user account holder may access the PIC functions from any device capable of accessing the internet, at any available bit-rate even at very low bit-rates, strictly for setting its own ISP VoIP user account parameters settings, in particular the call forwarding to another VoIP user.

DRAWINGS 5 to 8 are to be understood as any such mentioned devices and/or networks and/or interfaces, be it a voice over internet protocol device (VoIPD) and/or fixed device (FD) and/or desktop or portable computer (PC) and/or wireless device (WD), and/or warless network (WN), and/or public access network (PAN), internet device (ID) and/or internet service provider (ISP), and/or wireless private and/or public interface (IF_W), and/or fixed wired and/or wireless private and/or public interface (IF-P) to be a single or multiple thereof, VoIPD to VoIPn, FD to FDn, PC to PCn, WD to WDn, WN to WNn, PAN to PANn, ID to IDn, ISPD to ISPDn, IF_W1 to IF_Wn and IF_P1 to IF_Pn.

DRAWINGS 9 and 10 are to be understood as any such mentioned devices and/or networks and/or interfaces as explained herein before and as shown in DRAWINGS 5, 6, 7 and 8 and additionally a international public access network (IPAN) and public international interfaces (IF_PI), linking any such previous mentioned devices and/or networks and/or interfaces cross border or cross region or cross country, be it any single or multiple of the combinations as shown in DRAWING 5 and/or DRAWING 6 and/or DRAWING 7 and/or DRWAING 8 within each region or country and/or any single or multiple of the combinations of international public access network (IPAN to IPANn) and/or any single or multiple of the combinations of international interfaces (IF_PI1 to IF_PIn).

Specifically DAWINGS 9 and 10, show some of the preferred implementation embodiments of the invention at a macro level, by combining the architectures and interconnections of the embodiments of the present invention as shown previously in Drawings 5 to 8.

DAWINGS 11, 12 and 13, show some of the preferred implementation embodiments, of the PIC, PICWP and PVoIPCF respectively, of this invention, at flow chart level.

One of the preferred embodiments of the present invention and its advantages are best understood by referring to DRAWING 5. Essentially, in accordance with an embodiment of the present invention, a "proprietary internet converter" method and architecture(s) specifically for call(s) routing, or calls forwarding or calls divert, towards "voice over internet protocol users", applicable to users of any device(s) that can access the internet which have an associated "internet device" and/or "internet service provider" user account with at least one or more account specific call in number and call forwarding or call divert function to all of its corresponding "internet service provider users", whereas such call forwarding or call divert function may be performed by an "internet device" and/or "internet service provider" for each of their individual accounts or by a "proprietary voice over internet protocol call forwarding" embedded into such "internet device" and/or "internet service provider" capable of enabling, setting and disabling each of their individual accounts call forwarding or call divert, whereas any "voice over internet protocol device" (VOIPD), "fixed device" (FD), "desktop or portable computer" (PC) or "wireless device" (WD), meaning any device capable of accessing the internet in any possible way, will be able to interconnect and communicate with and access the user interface of the "proprietary internet converter" (PIC), meaning the internet or web pages of the "proprietary internet converter web pages" (PICWP) embedded into the PIC or separated from the PIC, whereas the PICWP is capable of interconnecting and communicating with the corresponding PIC and whereas the PIC is capable of interconnecting and communicating with the corresponding "internet device" (ID), "internet service provider" (ISP or ISPn), meaning with any device, with whom the corresponding previous mentioned VoIP-, FD-, PC- or WD- user has a user account with, and capable of accessing the internet in any possible way, with whom the PIC is able to interconnect and communicate with and access each corresponding user account parameters, specifically the "voice over internet protocol user" (VoIP user) incoming call forwarding function to other of its "VoIP users" provided by such ID, ISP or ISP or alternatively through an embedded "proprietary voice over internet protocol call forwarding" (PVoIPCF) within such corresponding ID and/or ISP and/or ISPn.

As a way of illustration of such benefits of the present invention, referring to DRAWING 5, let's make the following assumption or considerations:
- ISP has no own capability of incoming call forwarding function to other of its "VoIP users", and therefore it shows an embedded PVoIPCF within such ISP, whilst ISPn has such incoming call forwarding function to other of its "VoIP users", and say.
- an individual user authorised to use the functions of the PIC as "USER 1" and whereas USER 1 has a subscription with a wireless network (WN), and is the user of a WD capable of accessing the internet (WD USER 1) and also has a user account with an internet service provider ISPn (ISPn USER 1) with a user assigned account login and password, and with user assigned call in phone number (CALL IN 1), be such call in phone number a PSTN or SIP call-in line, assigned to such user account user (ISPn USER 1).
- another different individual user authorised to use the functions of the PIC as "USER 9" and whereas USER 9 has a subscription with a fixed network (PAN), and is the user of a FD, meaning a landline phone (PSTN, POTS, SIP) and a PC capable of accessing the internet (PC USER 9) and also has a user account with an internet service provider ISP (ISP USER 9) with a user assigned account login and password, and with user assigned landline call in phone number (CALL IN 9) to such user account user (ISP USER 9).

Considering the previous assumptions for this example, then at first one off the "PC USER 9" will connect to the internet, by any means available, be such connection protocol or interfaces PSTN, POTS, ISDN, SIP, E&M, V.5, V.11, V.35, ATM, X21, X25, DSL, XDSL, ADSL, ADSL2, ADSL2plus, SHDSL, VoIP- Gateway interface, 802.11, WiFi, WiMax, or any such other current or future interfaces or any such other PC means of connecting to and communicating through the internet, and basically will connect to the "internet protocol address" (IP address) or also referred to as "Uniform Resource Locator" (URL) of the PICWP and/or PIC, in example (i.e.) "internet web page 1" as shown in DRAWING 12, whereas the interface protocol of the PIC, with a build-in PICWP, can be but is not limited to chtml, htmb basic, x html, wml, WAP 2.0 or any such other variants thereof or different interface protocols. Consequently PC USER 9 will enter a specific "VoIP user" name of ISP, say i.e. "ISPn USER 999", whereas such VoIP user of ISP can be formed of any length of characters and as a combination of any characters, be they letters and/or numbers and/or symbols such as for example "myname99_new", and then the PC USER 9 will hit the send icon. Then the PIC will log-into "ISP USER 9" and set the incoming call forward function to "ISP USER 999" and optionally set the account status to "OFF LINE" and then log-out of such user account and then reply to "PC USER 9" with i.e. "internet web page 2", as shown in DRWAING 12. The "PC USER 9" know knows that his call forwarding is set in this specific example to "ISP USER 999", and then the "PC USER 9" can call from anywhere in the world using any device capable of making phone calls to the phone number "CALL IN 9" and then the "USER 9" will connect and communicate with "ISP USER 999".

As yet a different example, but still considering the previous assumptions for this next example, then at first one off the "WD USER 1" will connect to the internet, by any means available, be such connection protocol Doma, Fomu, TDMA, WTDMA, GPRS, UMTS, CSD, EDGE, WIFi, WiMax or any such other WD means of connecting to and communicating through the internet, and basically will connect to the "internet protocol address" (IP address) or also referred to as "Uniform Resource Locator" (URL) of the PICWP and/or PIC, in example (i.e.) "internet web page 1" as shown in DRAWING 12, whereas the interface protocol of the PIC, with a build-in PICWP, can be but is not limited to chtml, htmb basic, x html, wml, WAP 2.0 or any such other variants thereof or different interface protocols. Consequently "WD USER 1" will enter a specific "VoIP user" name of ISPn, say i.e. "ISPn USER 999", whereas such VoIP user of ISPn can be formed of any length of characters and as a combination of any characters, be they letters and/or numbers and/or symbols such as for example "myname99_new", and then the WD USER 1 will hit the send icon. Then the PIC will log-into "ISPn USER 1" and set the incoming call forward function to "ISPn USER 999" and optionally set the account status to "OFF LINE" and then log-out of such user account and then reply to "WD USER 1" with i.e. "internet web page 2", as shown in DRWAING 12. The "WD USER 1" simply has to click on the icon exemplary referred to in DRAWING 12 as "Click call to VoIP user" or in this specific example "Click call to ISPn USER 999", and then the WD of "WD USER 1" will recognise automatically the so called "Call to" function or command from the PIC and then the WD of "WD USER 1" will initiate an outgoing call to "CALL IN 1", however in some WD the WD may request the "WD USER 1" for an acknowledgement to initiate the call automatically to "CALL IN 1", and then the "WD USER 1" will connect and communicate with "ISPn USER 999". Is such "CALL IN 1" is i.e. a SIP call-in phone line and "WD USER 1" and "ISPn USER 999" have a voice/video capability then the previous mentioned call, which was call forwarded or sometimes also referred to as call diverted by the PIC and PICWB to "USER ISPn999", could be a voice/video call.

### SUMMARY OF THE INVENTION

It should be clear from the preceding disclosures that the present invention provides a "proprietary internet converter" method and architecture(s) specifically for call(s) routing, or calls forwarding or calls divert, towards "voice over internet protocol users", applicable to users of any device(s) that can access the internet which have an associated "internet device" and/or "internet service provider" user account with at least one or more account specific call in number and call forwarding or call divert function to all of its corresponding "internet service provider users", whereas such call forwarding or call divert function may be performed by an "internet device" and/or "internet service provider" for each of their individual accounts or by a "proprietary voice over internet protocol call forwarding" embedded into such "internet device" and/or "internet service provider" capable of enabling, setting and disabling each of their individual accounts call forwarding or call divert. The principals, preferred embodiments and modes of operation of the present invention have been described in the foregoing claims, descriptions of implementations and drawings. This invention provides an advantage allowing any fixed or wireless device, capable of accessing the internet, to communicate with any voice over internet protocol user of any internet service provider through a "proprietary internet converter" (PIC) and/or "proprietary internet converter web pages" (PICWP).

Moreover this invention provides an advantage allowing any fixed or wireless device, authorised to make use of the PIC and/or PICWP functions and capable of connecting and communicating with the internet, to communicate with all associated internet service provider (ISP) specific users with whom the fixed or wireless devices users have an account with, thus be able to connect and communicate with all ISP users, meaning any user that is logged into his account on any PC anywhere in the world or if he is not logged in but has forwarded his incoming call to a voice mail then to his voice mail or if he has his incoming calls diverted or call forwarded to a phone number then to that phone number or if he has his incoming calls diverted or call forwarded to another of ISP user then to that ISP user.

This ability to interconnect any fixed or wireless device and PIC, respectively controlled and interfaced by a PICWP and the associated internet service provider, is particularly advantageous for wireless devices international outgoing data and/or voice and/or video calls routing which currently are mostly restricted in the freedom of choice by the their wireless networks, and which choice is now with this invention fully in the hand of the end user of any fixed and wireless device user, capable of accessing the internet even at very low bit-rates, by using the services provided by a PIC and/or PICWP, which communicates with a ISP, and whereas wireless networks typically only allow calls to any phone number or any "Uniform Resource Locator" (URL) but do not allow to actually call to any ISP user or ISP user names, and with this present invention all fixed and particularly wireless device users will now be able to additionally call to any associated ISP user names or VoIP users as described within this invention, thus being able to access hundreds of millions of VoiP users around the world which were not accessible to most wireless device users around the world, in particular to those wireless device users who make use of a so called cheap or low to mid range wireless phones which form the bulk or majority of wireless devices or wireless phones or mobile phones used around the world.

The implementation of this invention and any variations and improvement thereof, whereas the PIC and/or the PICWP could reside in a ISP or the PIC could reside in a secure internet server (SIS) with duplicated server and power cut off protection back-up and the PICWP in an internet device (ID) or desktop computer (PC) or vice versa are only some of the possible variants of architecture and implementation of the present invention.

Many modifications and variations of this present invention are possible in view of the above disclosures, drawings and explanations. Thus, it is to be understood that, within the scope of the appended claims, the invention can be practiced other than as specifically described herein above. The invention which is intended to be protected herein should not, however, be construed as limited to the particular forms disclosed, or implementation examples outlined, as these are to be regarded as illustrative rather than restrictive. Variations in changes could be made by those skilled in the art without deviating from the spirit of the invention. Accordingly, the foregoing detailed disclosures, descriptions and drawings should be considered exemplary in nature and not limited to the scope and spirit of the invention as set forth in the claims herein.

## Claims

1. A method in a communications system consisting of a proprietary internet converter (PIC), with a build-in proprietary internet converter web pages (PICRWP), capable of communicating, through the internet, with internet devices (ID), service providers (ISP, ISPn) and fixed devices (FD), desktop or portable computers (PC), wireless devices (WD), voice over internet protocol devices (VoIPD), the method comprising the steps of:
- a method for interfacing and/or interconnecting and communicating any device capable of communicating through the internet, such as a fixed device (FD), desktop or portable computer (PC), wireless device (WD), voice over internet protocol device (VoIPD) or any such other device capable of communicating through or connected to an internet service provider (ISP) or to an internet device (ID) or to a public access network (PAN) or to a wireless network (WN), with one or more PIC, whereas each of the PIC may be resident or built-into yet another different device to the previous mentioned yet also capable of communication through the internet, such as fixed device (FD), desktop or portable computer (PC), voice over internet protocol device (VoIPD) or any such other device capable of accessing the internet and communicating through or connected to an internet service provider (ISP) or to an internet device (ID) or to a public access network (PAN) or to a wireless network (WN), whereas such previous mentioned devices have dedicated user(s) specific call forwarding function, be it their own call forwarding function or alternatively with a build-in proprietary VoIP call forwarding (PVoIPCF), and one or more call in phone number(s) function assigned to dedicated and specific user(s).
- a method for interfacing and/or interconnecting and communicating one or more PIC, through the internet, with yet another PIC or with any such voice over internet protocol (VoIP) user account(s) resident in a fixed device (FD), desktop or portable computer (PC), voice over internet protocol device (VoIPD) or any such other device capable of accessing the internet and communicating through or connected to an internet service provider (ISP) or to an internet device (ID) or to a public access network (PAN) or to a wireless network (WN), whereas a PIC is capable of setting the call forward function of each specific and corresponding VoIP user account, be it a 3^{rd} party call forwarding function or alternatively with a build-in proprietary VoIP call forwarding (PVoIPCF) function, and whereas each such PIC is capable of communicating a confirmation of such call forwarding, specifically VoIP user name call forwarding, confirmation return to the user that requested such call forwarding or return a "call to" command linked to the user specific assigned call in phone number.
- a method for interfacing and/or interconnecting and communicating one or more PC, FD, WD, VoIPD or any such other device capable of communicating through or connected to a ISP or ISPn or a ID, with one or more a PIC, through a public interface IF_P through a PAN and through yet another different to the previous mentioned IF_P or through a wireless interface IF_W through a WN and through a public interface IF_P and through a PAN and through yet another different to the previous mentioned IF_P.
- whereas PC to PCn are desktop and/or portable personal computer devices in any available current and future analogue and/or digital technologies respectively, capable of connecting and communicating through the internet.
- whereas VoIPD to VoIPDn are fixed and/or wireless voice over internet protocol devices in any available current and future analogue and/or digital technologies respectively, capable of connecting with and communicating through the internet.
- whereas FD to FDn are fixed devices in any available current and future analogue and/or digital technologies respectively, capable of making and receiving calls.
- whereas WD to WDn are wireless devices and/or wireless battery powered handheld devices in any available current and future analogue and/or digital technologies respectively, capable of connecting with and communicating through the internet and capable of making and receiving calls.
- whereas ID to IDn are fixed internet devices and/or server devices in any available current and future analogue and/or digital technologies respectively, capable of connecting with and communicating through the internet.
- whereas ISP to ISPn are service provider devices and/or computing devices and/or server devices in any available current and future analogue and/or digital technologies respectively, capable of connecting with and communicating through the internet and capable of connecting with and communicating to a public access network and/or a wireless network.
- whereas WN to WNn are wireless networks in any available current and future analogue and/or digital technologies respectively.
- whereas PAN to PANn are public access networks and/or switching networks in any available current and future analogue and/or digital technologies respectively.
- whereas IF_W, IF_W1 to IF_Wn are wireless interfaces in any available current and future analogue and/or digital technologies respectively.
- whereas IF_P1 to IF_Pn and IF_PC1 to IF_PCn are wired and/or wireless interfaces in any available current and future analogue and/or digital technologies respectively.

2. The method of claim 1, wherein. any individual or multiple PIC, has build-in one or more PICWP.

3. The method of claim 1 and 2, wherein. any individual or multiple PIC, may be located in the same geographical location (country 1) or in a different geographical location (country 2 to country n) then the devices with whom it will interconnect and/or communicate with.

4. The method of claim 1, 2 and 3 wherein. any individual or multiple proprietary internet converter (PIC) is capable of interfacing and communicating and processing multiple simultaneous in and/or outbound communications with any device capable of accessing the internet, such as but not limited to any individual or multiple PC, FD, WD and VoIPD, whereas each such individual PC, FD, WD and VoIPD user authorized to use the PIC functions also has an individual user account with an ID o ISP or ISPn, hereinafter each such previous mentioned authorized individual PC, FD, WD and VoIPD users are collectively referred to as "PIC users". At first of when a PIC user connects to the PIC, it will effectively interact with the PIC through the PICWP and whereas each such individual or multiple PIC is capable of interfacing and communicating and processing multiple simultaneous in and/or outbound communications with any individual or multiple "PIC users" and individual or multiple ID and/or ISP and/or ISPn and any such other different to the previous ID and/or ISP and/or ISPn.

5. The method of claim 1, 2, 3 and 4 wherein. any individual or multiple ID, has build-in one or more PIC and whereas such ID has at least one or more internet interfaces IF_P and whereas each such individual or multiple ID is capable of processing multiple simultaneous in and/or outbound communications with individual or multiple PIC users and individual or multiple ISP or ISPn.

6. The method of claim 1, 2, 3 and 4 wherein. any individual or multiple ISP or ISPn is capable of call forwarding incoming calls to its specific account user(s), be such incoming calls be originated from a call-in phone line(s) dedicated to each such account users or from other such ISP user(s), and whereas such ISP or ISPn has multiple internet interfaces IF_P, IF_Pn, capable of processing multiple simultaneous in and outbound communications.

7. The method of claim 1, 2, 3 and 4 wherein. any individual or multiple ISP or ISPn is capable of call forwarding incoming calls to its specific account user(s), where such incoming calls are originated from a call-in phone line(s) dedicated to each such account users only and such ISP or ISPn, having a build-in PVoIPCF, through the build-in PVoIPCF function also being capable of call forwarding incoming calls to its specific account user(s), where such incoming calls are originated from an other such ISP user(s) and whereas such ISP or ISPn has multiple internet interfaces IF_P, IF_Pn, capable of processing multiple simultaneous in and outbound communications. Whereas the PVoIPCF is capable of processing and setting any such call forwarding or call divert, received from any PIC, set by any such PIC authorised user, with such call forward or call divert request being of any length of characters and as a combination of any characters, be they letters and/or numbers and/or symbols and/or any combination of the previous.

8. The method of claim 6 wherein. any individual or multiple proprietary internet converter (PIC) is capable of interfacing and communicating concurrently or simultaneously with any individual or multiple PIC user and concurrently or simultaneously with any individual or multiple each such corresponding individual user account with an ISP or ISPn. At first one of when the PIC receives a call forward, or also known as call divert request, say from "PIC user1", more specifically a call forward request to a "VoIP userX" of "ISP1", then the PIC will connect to "ISP1" and log-into PIC user1 corresponding user account, say such corresponding user account has an associated "VoIP user1" name and an associated call in number in example "00123456789", and set the incoming call forwarding to "VoIP userX" and then reply back to the "PIC user1" confirmation of such call forwarding setting with a "call to" command or link through the PICWP, whereas the "PIC user1" then can decide which method it chooses to make use of such call forwarding function. From this previous confirmation receipt by the "PIC user 1";
- in the event the "PIC user1" is a PC or VoIPD user it can opt to call his own "VoIP user1" through "ISP1" or dial with any phone in the world, be it any fixed phone (FD) or any mobile or wireless phone (WD) or any internet service provider call out, his "VoIP user1" associated call in number "00123456789" in order to call "VoIP userX".
- in the event the "PIC user1" is wireless device (WD) user it can opt upon receipt of the call forwarding confirmation to acknowledge the "call to" command or link, whereas the WD will initiate automatically, in some WD with an additional WD acknowledgement request required by the WD user or "PIC user1" in this exemplary case, initiate a call to "VoIP user1" associated call in number "00123456789" " in order to call "VoIP userX".
Whereas the PIC, and the PICWP, are capable of processing any such call forwarding or call divert, from any PIC authorised user request, with such call forward or call divert request being of any length of characters and as a combination of any characters, be they letters and/or numbers and/or symbols and/or any combination of the previous.

9. The method of claim 8 wherein. any individual or multiple ISP user account, in example (i.e.) "ISP user1", has at least one or more then one call in phone number of different geographies or countries, thus allowing each corresponding "PIC user" (i.e. PIC user1) to call any "VoIP user" of each of the corresponding ISP from those different geographies or countries for equal to or less then the cost of a local call rate from the device it imitates such call to the corresponding country call in number.

10. The method of claim 8 wherein. any individual or multiple ISP user account, in example (i.e.) "ISP user1", has at least one or more then one call out phone service capable of calling any phony number of any region, geographies or countries, thus allowing each corresponding "PIC user" (i.e. PIC user1) to call any phone number by means of a call forwarding setting by i.e. the PIC user1, through the PIC and then through the corresponding ISP, of i.e. the corresponding ISP user1 account from.

11. The method of claim 8 and 9 wherein any individual or multiple PIC, or parts of it, is capable of communicating through the internet between or with yet another PIC(s), or parts of it, whereas such last mentioned PIC, or parts of it, is different to the first mentioned in this claim and whereas any of the PIC mentioned in this claim, or parts thereof, may be located in any ID, ISP, ISPn, VoIPD or PC based in any location in the world.

12. The method of claim 8 and 10 wherein any individual or multiple PIC, or parts of it, is capable of communicating through the internet between or with yet another PIC(s), or parts of it, whereas such last mentioned PIC, or parts of it, is different to the first mentioned in this claim and whereas any of the PIC mentioned in this claim, or parts thereof, may be located in any ID, ISP, ISPn, VoIPD or PC based in any location in the world..

13. The method of claim 7, 8, 9, 10, 11 and 12 wherein any individual or multiple ISP or ISPn user account, or parts of it, has build-in a proprietary voice over internet protocol call forwarding (PVoIPCF).

14. The method of claim 7, 8, 9, 10, 11 and 12 wherein parts of any individual or multiple PIC functions, is build.-into any ID, ISP, ISPn, VoIPD or PC, whilst the remaining parts of any such individual or multiple previous mentioned PIC functions is build.-into any, yet different to the previous mentioned, ID, ISP, ISPn, VoIPD or PC, whereas these last mentioned ID, ISP, ISPn, VoIPD or PC may be located in the same region or country then the first mentioned or in a different region or country, and whereas any such parts of any individual or multiple PIC functions is capable to connect and communicate with the corresponding remaining parts of each corresponding PIC.

15. The method of claim 13 and 14 wherein parts of any individual or multiple PIC functions, is build.-into any ID, ISP, ISPn, VoIPD or PC, whilst the remaining parts of any such individual or multiple previous mentioned PIC functions is build.-into any, yet different to the previous mentioned, ID, ISP, ISPn, VoIPD or PC, whereas these last mentioned ID, ISP, ISPn, VoIPD or PC may be located in the same region or country then the first mentioned or in a different region or country, and whereas any such parts of any individual or multiple PIC functions is capable to connect and communicate with the corresponding remaining parts of each corresponding PIC.

16. The method of claim 8, 9, 10, 11 and 12 wherein parts of any individual or multiple PIC functions, is build.-into any ID, ISP, ISPn, VoIPD or PC, whilst the remaining parts of any such individual or multiple previous mentioned PIC functions is build.-into any, yet different to the previous mentioned, ID, ISP, ISPn, VoIPD or PC, whereas these last mentioned ID, ISP, ISPn, VoIPD or PC may be located in the same region or country then the first mentioned or in a different region or country, and whereas any such parts of any individual or multiple PIC functions is capable to connect and communicate with the corresponding remaining parts of each corresponding PIC.

17. The method of claim 5, and 15 wherein parts of any individual or multiple PIC is build-into an ID, and whereas such ID has at least one or more internet interfaces IF_P and whereas each such individual or multiple ID is capable of processing multiple simultaneous in and/or outbound communications with individual or multiple PIC users and individual or multiple ISP or ISPn.

18. The method of claim 5, and 16 wherein parts of any individual or multiple PIC is build-into an ID, and whereas such ID has at least one or more internet interfaces IF_P and whereas each such individual or multiple ID is capable of processing multiple simultaneous in and/or outbound communications with individual or multiple PIC users and individual or multiple ISP or ISPn.

19. The method of claim 1, 2, 3, 4 wherein parts of any individual or multiple PIC functions, is build.-into any ID, ISP, ISPn, VoIPD or PC, whilst the remaining parts of any such individual or multiple previous mentioned PIC functions is build.-into any, yet different to the previous mentioned, ID, ISP, ISPn, VoIPD or PC, whereas these last mentioned ID, ISP, ISPn, VoIPD or PC may be located in the same region or country then the first mentioned or in a different region or country, and whereas any such parts of any individual or multiple PIC functions is capable to connect and communicate with the corresponding remaining parts of each corresponding PIC.

20. The method of claim 19, 8, 9, 10, 11 and 12 wherein parts of any individual or multiple PIC functions, is build.-into any ID, ISP, ISPn, VoIPD or PC, whilst the remaining parts of any such individual or multiple previous mentioned PIC functions is build.-into any, yet different to the previous mentioned, ID, ISP, ISPn, VoIPD or PC, whereas these last mentioned ID, ISP, ISPn, VoIPD or PC may be located in the same region or country then the first mentioned or in a different region or country, and whereas any such parts of any individual or multiple PIC functions is capable to connect and communicate with the corresponding remaining parts of each corresponding PIC.
